(19) Europäisches Patentamt / European Patent Office / Office européen des brevets

(11) EP 2 408 699 B1

(12) **EUROPEAN PATENT SPECIFICATION**

(45) Date of publication and mention
of the grant of the patent:
**23.09.2015 Bulletin 2015/39**

(21) Application number: **10710859.9**

(22) Date of filing: **23.02.2010**

(51) Int Cl.:
**B65H 18/00** (2006.01)

(86) International application number:
**PCT/FI2010/050122**

(87) International publication number:
**WO 2010/106219 (23.09.2010 Gazette 2010/38)**

(54) **ROLL ASSEMBLY FOR A FIBRE-WEB MACHINE AND METHOD OF ATTENUATING VIBRATION OF A FIBRE- WEB MACHINE ROLL**

ROLLENANORDNUNG FÜR EINE FASERBAHNMASCHINE UND VERFAHREN ZUR SCHWINGUNGSDÄMPFUNG EINER FASERBAHNMASCHINENROLLE

ENSEMBLE ROULEAU POUR UNE MACHINE À TOILE DE FIBRE ET PROCÉDÉ D'ATTÉNUATION DES VIBRATIONS D'UN ROULEAU DE MACHINE À TOILE DE FIBRE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **18.03.2009 FI 20095277**

(43) Date of publication of application:
**25.01.2012 Bulletin 2012/04**

(73) Proprietor: **Valmet Technologies, Inc.
02150 Espoo (FI)**

(72) Inventor: **JORKAMA, Marko
FI-04420 Järvenpää (FI)**

(74) Representative: **Ansala, Jyrki Matti
Genip Oy
Heikinkatu 7
48100 Kotka (FI)**

(56) References cited:
EP-A2- 0 819 638          WO-A1-2007/144466
WO-A1-2009/153401    DE-A1-102006 023 831
US-A- 4 313 577          US-A1- 2007 238 597

## Description

The present invention relates to a roll assembly for a fibre-web machine according to the preamble of claim 1 comprising at least at one end thereof a bearing assembly with a bearing housing, which bearing housing comprises a flexible and attenuating attachment arrangement, by means of which the roll can be attached in a flexible and attenuating manner on the frame or foundation of the fibre-web machine. The invention also relates to a method of attenuating the vibration of a fibre-web machine roll, in which method the roll is rotatably attached at its ends on a bearing assembly in bearing housings, which bearing housings are supported in a flexible and attenuating manner on the frame or foundation of the fibre-web machine.

Along with the increasing widths and higher speeds of fibre-web machines the vibration of rolls is becoming an ever-increasing problem. The rolls in fibre-web machines are used for instance to guide the travel of the web and/or support fabric. As for the properties of the fibrous web, such operative positions of the rolls, in which the roll is involved in the processing of the web, such as roll nips, calender rolls, counter rolls for coating and winding drums or reeling drums are, however, the more essential. Especially, the winding drums and drums of slitter-winders used for web finishing are challenging objects in terms of vibration, since the winding of customer reels of different sizes and possibly containing various kinds of flaws will easily get disturbed due to excessive vibration. Traditionally, the rolls are attached onto foundations as rigidly as possible, especially when the drums of a slitter-winder are concerned.

Vibration is a problem particularly in two-drum or belt-type winders. A vibration problem occurring with drum winders arises when the harmonics of the rotational speed of a paper roll produced on drums excites the natural frequencies of the drums. The same type of a vibration problem occurs also with the reeling drums of reelups. The resonance vibrations during the operation of a machine or a device are often caused by insufficient damping, i.e. inadequate dynamic stiffness at the resonance frequency. It is often possible to improve the situation by directly modifying the resonating structure in order to increase its damping.

Publications WO9849394, WO0004227 and WO0004228 disclose solutions, in which an adjustable mass absorber is arranged in the bearing housing of a paper machine roll. In the solution according to the publications, the adjustability of the frequency of the vibration to be absorbed is realised by changing the position of the mass on a vibrating rod or alternatively, by changing the magnitude of the mass. Since the absorber is relatively easy to access, the tuning can be changed even during the operation of the machine. However, this kind of a solution is not always capable of providing sufficient attenuation of vibration. To provide efficient attenuation of vibration the vibrating mass should be very large, which is not advantageous e.g. in view of space utilisation and also due to the solid support structures, which are then required.

FI patent 94458 discloses a method and an apparatus for controlling the vibrations of paper machine rolls. According to the method, the locations of critical speed areas are changed during the operation. The critical speed is changed by adjusting the mass and/or the stiffness of the roll, and/or the attachment point of the roll. Amending the stiffness of the bearing assembly at the ends of the roll is suggested as an alternative. Intermediate pieces of elastic material may be placed between the base plate of the bearing housings of the end bearings and the frame. The stiffness of the attachment of the bearing housings can be adjusted by adjusting the force, by which the bearing housing presses the intermediate pieces against the frame. Said pressing force can be adjusted by means of a cylinder device or a screw.

JP patent publication 3082843 discloses an arrangement for attenuating vibrations of a roll. The drive motor of the roll is flexibly attached to the frame. The attachment includes a vibration-proof intermediate piece of rubber between the bottom plate of the securing part of the drive motor and the frame. The securing bolts of the bottom plate extend through the frame plate to a cylinder attached to the bottom surface of the frame plate, where they are secured to a piston in the cylinder. There are rubber sleeves under the heads of the securing bolts, whereby the attachment of the bottom plate is made floating. The inner surface of the cylinder is provided with an extension, which limits the movement of the piston upwards in the cylinder. There is a spring between the cylinder top and the upper surface of the piston, and a pressure space with pressurised air as the pressure medium between the bottom surface of the piston and the bottom of the cylinder. At first, the piston is taken pneumatically against the extension of the inner surface of the cylinder, whereby the intermediate rubber pieces and the sleeves are subjected to a minimum compression force. As soon as the pressure of the compressed air under the piston is decreased, the piston moves downwards by the force of the spring above the piston, whereby a larger compression force is exerted on the intermediate rubber pieces and the rubber sleeves. Thus, the stiffness of the roll attachment can be regulated by the pressure of the pressure medium under the piston.

FI patent No. 118482 discloses a roll attachment in a paper or board machine, where the roll is rotatably attached at its ends on bearings in bearing housings, which bearing housings are supported on the frame or foundation of the machine by means of elastic intermediate pieces. In the publication, a specific advantageous range of variation is given to the spring constant of the intermediate pieces. In this arrangement, the damping capacity of a weakly dampened flexible structure is increased by changing the boundary conditions for the structure so that damping is introduced into the structure to be dampened through its attachment. Then, the static stiffness of the structure and its attachment is decreased, but the dynamic stiffness of the structure itself increases. Although the solution as such is advantageous and efficient, there has lately arisen a need to further improve the damping efficiency in order to provide enhanced vibration damping properties.

Slender rolls, in particular, bend more at their lowest natural frequency than the short and thick rolls. Thus, the relative movement between the bearing housing and the roll centre is smaller with slender rolls. This weakens the efficiency of the damping solution according to FI patent 118482 especially for slender rolls. The lowest natural frequency of slender rolls is even with a fixed bearing housing fairly close to the maximum natural frequency of the roll. Hereby, the optimum flexibility of the solution according to FI 118482 cannot necessarily be utilised, as the natural frequency of the roll may drop very close to the maximum rotational frequency of the roll. A roll assembly according to the preamble of claim 1 and a method according to the preamble of claim 5 are disclosed in EP 0819638 A2.

The particular purpose of the present invention is to raise the level of technology from prior art by providing such a roll assembly for a fibre-web machine, by which the roll vibrations can be affected more efficiently than before. A special purpose of the invention is to provide a method of attenuating the vibration of slender rolls.

The roll assembly for a fibre-web machine according to the invention comprises at its both ends a bearing assembly with a bearing housing, which bearing housing comprises a flexible and attenuating attachment arrangement by means of which the roll can be attached in a flexible and attenuating manner on the frame or foundation of the fibre-web machine, and a mass absorber which is arranged in conjunction with the bearing housing, whereby the damping of the vibration of the roll assembly is arranged by the cooperation of the bearing housing that is attached in a flexible and attenuating manner and the mass absorber in conjunction therewith. The roll assembly is mainly characterised in that the ratio of the shell length of the roll to the diameter thereof is at least seven, and that the bearing housing is arranged on the frame or foundation of the fibre-web machine to vibrate at an amplitude of the bearing housing movement which is $\geq$ 10 % of the amplitude of the movement of the roll centre at the eigenmode corresponding to the lowest bending eigenfrequency of the roll.

According to one embodiment, the spring constant of the flexible and attenuating attachment arrangement of the bearing housing is 0.04 GN/m - 1 GN/m. Preferably, the attachment arrangement comprises intermediate pieces to be placed between the attachment lugs of the bearing housings and the frame or foundation of the fibre-web machine. According to one embodiment of the invention, the loss factor of the flexible and attenuating attachment arrangement of the bearing housing is 0.01 $<\eta<$2.

Preferably, the roll is a slender roll. In this context a slender roll refers to such a roll, the shell length of which is at least seven times the diameter of the roll shell. According to one preferable embodiment of the invention, the roll assembly for a fibre-web machine comprises at its both ends a bearing assembly, the bearing housing of which comprises a flexible and attenuating attachment arrangement.

Such a flexible and attenuating attachment of the bearing housing creates prerequisites for efficient operation of the mass absorber. In addition, the overall effect is improved even if the stiffness of the bearing housing attachment is decreased. In other words, by bringing the bearing housing to vibrate with a larger vibratory motion range by arranging its attachment more flexible than before, a stronger excitation is created for the mass absorber and thereby more efficient overall operation is provided.

The roll assembly for a fibre-web machine according to one embodiment of the invention comprises a roll, the ratio of the shell length of which roll to the diameter thereof is at least 7, and both ends of which roll are provided with a bearing assembly with a bearing housing. The bearing housing comprises a flexible and attenuating attachment arrangement, by means of which the roll can be attached in a flexible and attenuating manner on the frame or foundation of the fibre-web machine so that the bearing housing is arranged to vibrate at the amplitude of the bearing housing movement, which is $\geq$ 10 % of the amplitude of the movement of the roll centre at the eigenmode corresponding to the lowest bending eigenfrequency of the roll. A mass absorber is arranged in conjunction with the bearing housing, whereby the damping of the vibration of the roll assembly is arranged by the cooperation of the bearing housing that is attached in a flexible and attenuating manner and the mass absorber in conjunction therewith.

According to one embodiment of the invention, the fibre-web machine roll is a reeling drum of a reel-up for a web reel, such as a winding drum of a machine winder or a single-drum winder. According to another embodiment of the invention, the fibre-web machine roll is a drum in the winding section of a two-drum winder. Preferably, the mass of the mass absorber is $\leq$ 5 % of the roll mass.

In the method according to the invention of attenuating the vibration a fibre-web machine roll, the roll is rotatably attached at its ends on a bearing assembly in bearing housings and the bearing housings are supported in a flexible and attenuating manner on the frame or foundation of the fibre-web machine. A mass absorber is arranged in conjunction with the flexible and attenuating bearing housing attachment, whereby vibration is damped by the cooperation of the bearing housing that is attached in a flexible and attenuating manner and the mass absorber in conjunction therewith. The method is mainly characterised in that the that the ratio of the shell length of the roll to the diameter thereof is arranged to be at least seven, and that the bearing housing is supported on the frame or foundation of the fibre-web machine so that the vibration amplitude of the bearing housing movement is $\geq 10\%$ of the amplitude of the movement of the roll centre at the eigenmode corresponding to the lowest bending eigenfrequency of the roll.

In the method, due to the flexible attachment of the bearing housing of the roll, the relative movement of the bearing housing with respect to roll body is increased at the lowest bending eigenfrequency, whereby the efficiency of the mass absorber is improved. In this context, the efficiency of the mass absorber is to be understood as the ratio between the reduction of the maximum value of the amplitude of the frequency response function of the lowest bending eigenfrequency and the mass of the mass absorber, measured at the roll centre.

By the method of this kind, the vibrations of a rotating roll can be damped very efficiently. The advantages of the invention are most obvious in case of a slender roll. In this context, a slender roll refers to such a roll, the shell length of which is at least seven times the diameter of the roll shell.

According to one embodiment of the invention, the bearing housing is attached so that its flexibility is such that the amplitude of the movement of the bearing housing is $\geq 10\%$ of the amplitude of the movement of the roll centre at the eigenmode corresponding the lowest bending eigenfrequency of the roll.

Preferably, the flexibility of the bearing housing is adapted so that the amplitude of the bearing housing movement is 10% - 20% of the amplitude of the movement of the roll centre at the eigenmode corresponding the lowest bending eigenfrequency of the roll.

According to one embodiment of the invention, the bearing housing is supported flexibly on the frame or foundation of the fibre-web machine by means of flexible and attenuating intermediate pieces. Then, the spring constant of the intermediate pieces is preferably 0.04 GN/m - 1 GN/m and the loss factor $0.01 < \eta < 2$.

According to another embodiment of the invention, the lower limit of the spring constant of the intermediate pieces is determined by the prerequisite that the critical speed of the roll is higher than the maximum rotational frequency of the roll. Preferably, the critical speed of the roll is at least 10 % higher than the maximum rotational frequency of the roll.

According to one embodiment, the operation of the mass absorber is tuned during the operation of the fibre-web machine. Then, it is advantageous to set the natural frequency of the mass absorber itself to follow a desired excitation frequency. Especially when applying the invention to a roll of a reel-up of a slitter-winder, the natural frequency of the mass absorber is set to follow the excitation frequency of the web roll/rolls to be wound.

According to another embodiment, the mass absorber operates at a constant frequency.

According to one embodiment of the invention, the reeling drum or the drum of the winding section of a slitter-winder for uncoated fine paper comprises a roll assembly according to the invention.

One embodiment of the invention relates to a roll assembly comprising a roll, both ends of which roll are provided with a bearing assembly with a bearing housing, which bearing housing comprises a flexible and attenuating attachment arrangement, by means of which the roll can be attached in a flexible and attenuating manner on the frame or foundation of a fibre-web machine so that a mass absorber is arranged in conjunction with the bearing housing to be used as a reeling drum/drum for the slitter-winder for a fibrous web.

Other embodiments of the invention are shown in the appended claims and in the disclosure of the drawings.

In the following, the invention and its operation will be explained with reference to the appended schematic drawings, of which

- Figure 1 shows schematically a slender roll according to one embodiment,
- Figure 2 shows schematically the amplitude of the frequency response illustrating the operation of the invention.

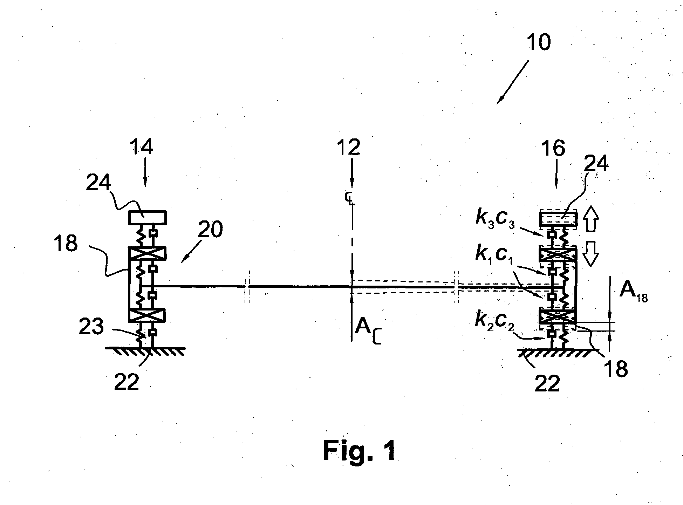

Figure 1 shows schematically a roll assembly 10 for a fibre-web machine according to one embodiment of the invention. In the figure, the roll of the roll assembly is cut in the longitudinal direction (in the cross-direction of the fibre-web machine) at two points, whereby the central area 12 of the roll and the first and second end 14, 16 thereof are shown herein. Further, the vibration of the roll assembly during operation is illustrated on the right side in the figure. The roll is a so-called slender roll, the length of which is at least seven times the diameter of the roll shell. The roll is rotatably attached at its ends by means of bearing assemblies 20. The roll is attached on the bearing assembly 20 in the bearing housings 18 located at its both ends.

The flexibility of the bearing assembly is indicated by the spring constant $k_1$ and the attenuation by the attenuation constant $c_1$. Here, the attenuation is described by way of example as viscous damping, but the attenuation is not limited to viscous damping only. As to the bearing housings 18, they are supported on the frame or foundation 22 of the fibre-web machine. The attachment of the bearing housings is realised in a flexible and attenuating manner, whereby the bearing housing is arranged to move in an attenuated manner with respect to the frame or foundation 22, while the roll is vibrating. The bearing housing is preferably supported on the frame or foundation 22 of the fibre-web machine by means of an intermediate piece 23. Here, the intermediate piece is indicated by the symbols of flexibility and attenuation. The flexibility is here indicated by the spring constant $k_2$ and the attenuation by the attenuation constant $c_2$. According to the invention, a mass absorber 24 is arranged in conjunction with the bearing housing of the roll assembly. The mass absorber is a mass attached in a flexible and attenuating manner to the bearing housing, which mass is arranged to dampen the roll vibration, when adequately tuned. The flexibility of the mass absorber with respect to the bearing housing is indicated by the spring constant $k_3$ and the attenuation by the attenuation constant $c_3$. Thus, the roll vibration is attenuated by arranging the mass absorber 24 in conjunction with the bearing housing 18 that is attached in a flexible and attenuating manner $k_2, c_2$. In this way, the vibration is damped by the cooperation of the bearing housing that is attached in a flexible and attenuating manner and the mass absorber in conjunction therewith, whereby especially the damping of the vibration of a slender roll is efficient.

The mass absorber 24 in the embodiment according to Figure 1 is a combination of s spring and a mass, where the mass is attached to the bearing housing 18 via the spring $k_3, c_3$. The bearing housing is supported on the frame or foundation 22 of the fibre-web machine in a flexible and attenuating manner so that the magnitude of amplitude $A_{18}$ of the vibratory motion of the bearing housing is such that favourable conditions are created for the operation of the mass absorber 24. In practise this means that the flexible and attenuating support allows a sufficiently large movement for the bearing housing, when the roll is in operation. This movement creates prerequisites for efficient operation of the mass absorber and improves the overall damping of the vibration of the roll assembly. A bearing housing that is supported on the frame too stiffly does not give sufficient excitation to the mass absorber in terms of its operation. The spring constant $k_2$ of the flexibility of the bearing housing is 0.04 GN/m - 1 GN/m.

In this manner, the impact of the mass absorber on the damping of vibration is made more efficient and the operation of the mass absorber is efficient with a relatively small mass of the mass absorber. Preferably, the mass of the mass absorber is < 5 % of the mass of the roll. In the vibratory motion of the bearing housing the amplitude $A_{18}$ is preferably arranged to be $\geq$ 10 % of the amplitude $A_c$ of the movement of the roll centre, whereby the mass absorber 24 is made to operate according to the invention.

Preferably, the flexibility of the bearing housing is arranged so that the amplitude of the movement of the bearing housing is 10% - 20% of the amplitude of the movement of the roll centre.

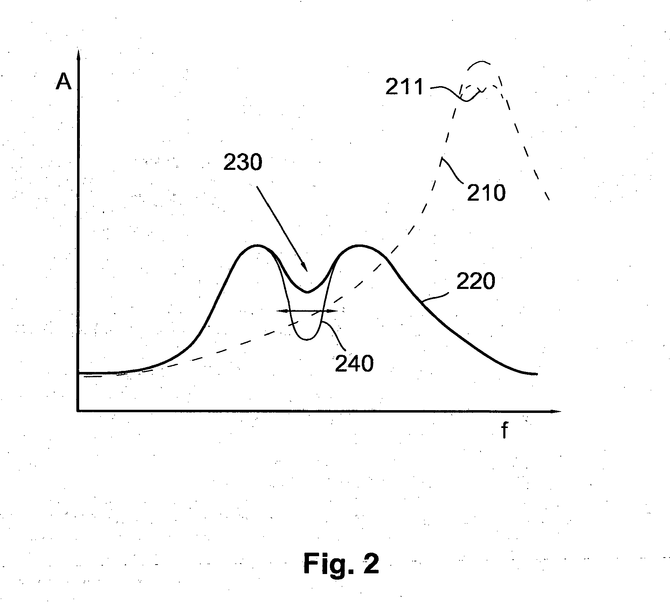

Figure 2 illustrates the operation of the invention by means of the amplitude A of the frequency response f of the vibration of a slender roll. In the figure, the behaviour of a slender roll without applying the method and arrangement according to the invention is shown by a dashed line 210 and the behaviour of the roll when utilising the invention is shown by a solid line 220. When the roll is provided with nothing but a mass absorber, only a small section of the amplitude can be cut off, as shown by the curve 211. This is due to the fact that, in the case of a slender roll, in a normal stiff bearing housing attachment the housing is practically immobile at the lowest bending eigenfrequency of the roll compared to the movement of the roll centre.

When sufficient flexibility of the bearing housing (and the amplitude of its vibration) is arranged at the same time and the additional affect of the mass absorber is combined therewith, a conspicuous decrease in the vibration is obtained in a situation with sufficient flexibility of the bearing housing. This is illustrated by the curve 220. As soon as the flexibility of the bearing housing attachment is sufficiently high, the mass of the mass absorber can be relatively small. By the solution according to the invention, excellent damping properties can be achieved for a mass that is only < 5 % of the mass of the roll.

According to one embodiment of the invention, the operation of the mass absorber is tuned during the operation of the fibre-web machine. The position of the lower bend 230 in Figure 2 is determined by the equation

$$f = 1/2\pi \ \sqrt{(k_3/m)}$$

where $k_3$ is the spring constant of the mass absorber and m is the vibrating mass of the mass absorber. The tunability during operation can be realised for instance by an adjustable mass m or by an adjustable spring constant $k_3$. Then, the position of the lower bend 230 can be adjusted to follow the most significant excitation frequency. When the roll is a winding drum of a slitter-winder for a fibrous web, it is advantageous to make the adjustment comply with the excitation of the most significant customer roll, i.e. follow its excitation frequency. In adaptive damping, where the operation of the mass absorber is tuned during the operation of the fibre-web machine, it is advantageous to arrange the damping of the mass absorber small, as shown by the curve 240 in Figure 2. Then, the lower bend 230 is particularly deep indicating an especially good vibration damping ability within a relatively narrow, but tunable frequency range.

It is to be noted that only a few most advantageous embodiments of the invention are described in the above. Thus, it is clear that the invention is not limited to the above-described embodiments, but may be applied in many ways within the frame of the appended claims. Thus, it is clear that the invention is not limited to the above-described embodiments, but may be applied in many ways within the frame of the appended claims. The features described in conjunction with the different embodiments may be used in conjunction with other embodiments as well and/or various combinations of the described features may be made within the frame of the basic idea of the invention, if so desired, and if technical feasibility for this exists.

## Claims

1. A roll assembly (10) for a fibre-web machine comprising at its both ends a bearing assembly (20) with a bearing housing, which bearing housing (18) comprises a flexible and attenuating attachment arrangement, by means of which the roll can be attached in a flexible and attenuating manner on the frame or foundation (22) of the fibre-web machine, and a mass absorber (24) arranged in conjunction with the bearing housing, whereby the damping of the vibration of the roll assembly is arranged by the cooperation of the bearing housing that is attached in a flexible and attenuating manner and the mass absorber (24) in conjunction therewith, **characterised in that** the ratio of the shell length of the roll to the diameter thereof is at least seven, and that the bearing housing is arranged on the frame or foundation of the fibre-web machine to vibrate at an amplitude of the bearing housing movement which is ≥ 10 % of the amplitude of the movement of the roll centre at the eigenmode corresponding to the lowest bending eigenfrequency of the roll.

2. A roll assembly for a fibre-web machine according to claim 1, **characterised in that** the loss factor of the flexible and attenuating attachment arrangement of the bearing housing (18) is 0.01 <η<2.

3. A roll assembly for a fibre-web machine according to anyone of the preceding claims, **characterised in that** the roll in the roll assembly (10) is a slender roll.

4. A roll assembly for a fibre-web machine according to claim 1 or 3, **characterised in that** the roll is a roll for the winding section of a slitter-winder.

5. A method of attenuating the vibration of a roll (10) of a fibre-web machine, in which method the roll is rotatably attached at its ends on a bearing assembly (20) in bearing housings, which bearing housings (18) are attached in a flexible and attenuating manner on the frame or foundation of the fibre-web machine, a mass absorber (24) is arranged in conjunction with the bearing housing that is attached in a flexible and attenuating manner, whereby vibration is damped by the cooperation of the bearing housing that is attached in a flexible and attenuating manner and the mass absorber in conjunction therewith, **characterised in that** the ratio of the shell length of the roll to the diameter thereof is at least seven and the bearing housing is supported on the frame or foundation of the fibre-web machine so that the vibration amplitude of the bearing housing movement is ≥ 10 % of the amplitude of the movement of the roll centre at the eigenmode corresponding to the lowest bending eigenfrequency of the roll.

6. A method according to claim 5, **characterised in that** the bearing housing (18) is flexibly supported on the frame or foundation in a manner allowing such a movement of the bearing housing (18) that prerequisites for efficient damping are created for the mass absorber in conjunction with the bearing housing.

7. A method according to claim 5, **characterised in that** the operation of the mass absorber (24) is tuned during the operation of the fibre-web machine.

8. A method according to claim 7, **characterised in that** the natural frequency of the mass absorber (24) itself is set to follow a desired excitation frequency.

## Patentansprüche

1. Walzenanordnung (10) für eine Faserbahnmaschine, die an ihren beiden Enden eine Lageranordnung (20) mit einem Lagergehäuse umfasst, wobei das Lagergehäuse (18) eine flexible und dämpfende Anbringungsanordnung umfasst, mit deren Hilfe die Walze in einer flexiblen und dämpfenden Weise am Rahmen oder der Gründung (22) der Faserbahnmaschine angebracht werden kann, und einen Masseabsorber (24), der in Verbindung mit dem Lagergehäuse angeordnet ist, wobei die Dämpfung der Schwingung der Walzenanordnung durch das Zusammenspiel des Lagergehäuses, das in einer flexiblen und dämpfenden Weise angebracht ist, und des damit in Verbindung stehenden Masseabsorbers (24) angeordnet ist, **dadurch gekennzeichnet, dass** das Verhältnis der Mantellänge der Walze zu deren Durchmesser mindestens sieben beträgt und dass das Lagergehäuse am Rahmen oder der Gründung der Faserbahnmaschine angeordnet ist, um bei einer Bewegungsamplitude der Lagergehäusebewegung zu schwingen, die ≥ 10 % der Bewegungsamplitude der Walzenmitte mit Eigenform entsprechend der niedrigsten Biegeeigenfrequenz der Walze ist.

2. Walzenanordnung für eine Faserbahnmaschine nach Anspruch 1, **dadurch gekennzeichnet, dass** der Verlustfaktor der flexiblen und dämpfenden Anbringungsanordnung des Lagergehäuses (18) 0,01<η<2 ist.

3. Walzenanordnung für eine Faserbahnmaschine nach einem der vorhergehenden Ansprüche, **dadurch gekennzeichnet, dass** die Walze in der Walzenanordnung (10) eine schmale Walze ist.

4. Walzenanordnung für eine Faserbahnmaschine nach Anspruch 1 oder 3, **dadurch gekennzeichnet, dass** die Walze eine Walze für den Wickelabschnitt eines Rollenschneiders ist.

**5.** Verfahren zum Dämpfen der Schwingung einer Walze (10) einer Faserbahnmaschine, wobei die Walze bei dem Verfahren an ihren Enden drehbar an einer Lageranordnung (20) in Lagergehäusen angebracht wird, wobei die Lagergehäuse (18) in einer flexiblen und dämpfenden Weise am Rahmen oder der Gründung der Faserbahnmaschine angebracht werden, wobei ein Masseabsorber (24) in Verbindung mit dem in einer flexiblen und dämpfenden Weise angebrachten Lagergehäuse angeordnet wird, wodurch die Schwingung durch das Zusammenspiel des in einer flexiblen und dämpfenden Weise angebrachten Lagergehäuses und des mit diesem in Verbindung stehenden Masseabsorbers gedämpft wird, **dadurch gekennzeichnet, dass** das Verhältnis der Mantellänge der Walze zu deren Durchmesser mindestens sieben beträgt und dass das Lagergehäuse vom Rahmen oder der Gründung der Faserbahnmaschine getragen wird, so dass die Schwingungsamplitude der Lagergehäusebewegung ≥ 10 % der Bewegungsamplitude der Walzenmitte mit Eigenform entsprechend der niedrigsten Biegeeigenfrequenz der Walze ist.

**6.** Verfahren nach Anspruch 5, **dadurch gekennzeichnet, dass** das Lagergehäuse (18) in einer Weise flexibel vom Rahmen oder der Gründung getragen wird, die eine derartige Bewegung des Lagergehäuses (18) ermöglicht, dass Voraussetzungen für ein effizientes Dämpfen für den Masseabsorber in Verbindung mit dem Lagergehäuse geschaffen werden.

**7.** Verfahren nach Anspruch 5, **dadurch gekennzeichnet, dass** der Betrieb des Masseabsorbers (24) während des Betriebes der Faserbahnmaschine abgestimmt wird.

**8.** Verfahren nach Anspruch 7, **dadurch gekennzeichnet, dass** die Eigenfrequenz des Masseabsorbers (24) selbst derart eingestellt wird, dass sie einer gewünschten Anregungsfrequenz folgt.

**Revendications**

**1.** Ensemble à rouleau (10) pour machine de production de nappe fibreuse, comprenant à ses deux extrémités un ensemble palier (20) pourvu d'un logement de palier, lequel logement de palier (18) comprend un système de fixation souple et amortisseur au moyen duquel le rouleau peut être fixé de manière souple et amortie sur le châssis ou la base (22) de la machine de production de nappe fibreuse et un absorbeur de masse (24) disposé en conjonction avec le logement de palier, l'amortissement de la vibration de l'ensemble à rouleau étant assuré par la coopération du logement de palier qui est fixé de manière souple et amortie et de l'absorbeur de masse (24) en conjonction avec celui-ci, **caractérisé en ce que** le ratio entre la longueur de la coque du rouleau et son diamètre est d'au moins sept et que le logement de palier est disposé sur le châssis ou la base de la machine de production de nappe fibreuse de manière à vibrer à une amplitude du mouvement du logement de palier qui est ≥ 10 % à l'amplitude du mouvement du centre du rouleau au mode propre correspondant à la plus faible fréquence propre de courbure du rouleau.

**2.** Ensemble à rouleau pour machine de production de nappe fibreuse selon la revendication 1, **caractérisé en ce que** le facteur de perte du système de fixation souple et amortie du logement de palier (18) est de $0{,}01 < \eta < 2$.

**3.** Ensemble à rouleau pour machine de production de nappe fibreuse selon l'une quelconque des revendications précédentes, **caractérisé en ce que** le rouleau contenu dans l'ensemble à rouleau (10) est un rouleau mince.

**4.** Ensemble à rouleau pour machine de production de nappe fibreuse selon la revendication 1 ou 3, **caractérisé en ce que** le rouleau est un rouleau pour la section d'enroulement d'une découpeuse bobineuse.

**5.** Procédé d'amortissement de la vibration d'un rouleau (10) d'une machine de production de nappe fibreuse, dans lequel procédé le rouleau est fixé de manière à pouvoir tourner par ses extrémités sur un ensemble palier (20) dans des logements de palier, lesquels logements de palier (18) sont fixés de manière souple et amortie sur le châssis ou la base de la machine de production de nappe fibreuse, un absorbeur de masse (24) est disposé en conjonction avec le logement de palier qui est fixé de manière souple et amortie, la vibration de l'ensemble à rouleau étant amortie par la coopération du logement de palier qui est fixé de manière souple et amortie et de l'absorbeur de masse en conjonction avec celui-ci, **caractérisé en ce que** le ratio entre la longueur de la coque du rouleau et son diamètre est d'au moins sept et que le logement de palier est disposé sur le châssis ou la base de la machine de production de nappe fibreuse de manière à ce que l'amplitude de vibration du mouvement du logement de palier soit ≥ 10 % à l'amplitude du mouvement du centre du rouleau au mode propre correspondant à la plus faible fréquence propre de courbure du rouleau.

**6.** Procédé selon la revendication 5, **caractérisé en ce que** le logement de palier (18) est supporté en souplesse sur le châssis ou la base d'une manière à ce qu'un mouvement du logement de palier (18) qui préexige un amortissement efficace soit généré pour l'absorbeur de masse en conjonction avec le logement de palier.

7. Procédé selon la revendication 5, **caractérisé en ce que** le fonctionnement de l'absorbeur de masse (24) est réglé pendant le fonctionnement de la machine de production de nappe fibreuse.

8. Procédé selon la revendication 7, **caractérisé en ce que**, **caractérisé en ce que** la fréquence naturelle de l'absorbeur de masse (24) lui-même est définie de manière à suivre une fréquence d'excitation désirée.

$k_3 c_3$

$k_1 c_1$

$A_{18}$

$k_2 c_2$

**Fig. 1**

**Fig. 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9849394 A
- WO 0004227 A
- WO 0004228 A
- FI 94458
- JP 3082843 B
- FI 118482
- EP 0819638 A2